# EUROPÄISCHE PATENTANMELDUNG

(11) **EP 2 290 880 A1**
(43) Veröffentlichungstag der Anmeldung: **02.03.2011**
(21) Anmeldenummer: 10008762.6
(22) Anmeldetag: 23.08.2010
(51) Int. Cl.: H04L 12/28

(54) **Datenübertragungsnetzwerk**

(30) Priorität: 23.08.2009 DE 202009011335 U; 03.09.2009 DE 202009011980 U; 18.09.2009 DE 202009012690 U; 28.09.2009 DE 202009013003 U
(71) Anmelder: Aizo AG, 35578 Wetzlar (DE)
(72) Erfinder: Beck, Wilfried, 35578 Wetzlar (DE)

(57) **Zusammenfassung**

Die Erfindung betrifft ein Datenübertragungsnetzwerk zum Anschluß eines elektrischen Geräts über ein erstes Netzwerk an ein zweites Netzwerks, wobei zur Verbesserung der Reichweite des zweiten Netzwerks das zweite Netzwerk ein Netzwerk eines Hausstromnetzes ist und wobei das erste und das zweite Netzwerk ein physisch/physikalisch anderes Übertragungsmedium verwendet als das erste Netzwerk und wobei das zweite Netzwerk eine Verarbeitungseinheit aufweist, sowie einen Speicher, und wobei der Speicher eine Datenbank umfasst und wobei die Daten zum Anschluß des Gerätes an das erste Netzwerk automatisiert der Datenbank des Speichers mit Hilfe der Verarbeitungseinheit entnehmbar sind, um dem anzuschließenden Gerät den Zutritt in das erste Netzwerke zu ermöglichen

## Beschreibung

Die Erfindung betrifft ein Datenübertragungsnetzwerk. Datenübertragungsnetzwerke bestehen oftmals aus WLAN-Netzwerken. Derartige Wireless Local Area Netzwerke (WLAN) bezeichnen ein lokales Funknetz, wobei meistens ein Standard der IEEE-802.11-Familie gemeint ist. Für diese engere Bedeutung wird in manchen Ländern weitläufig der Begriff Wi-Fi verwendet. Bei WLAN kommt heute meistens das Modulationsverfahren OFDM zum Einsatz

Der Aufbau großer und auf reiner Funktechnik basierender WLANs mit mehreren Basisstationen und unterbrechungsfreiem Wechsel der Clients zwischen den verschiedenen Basisstationen ist im Standard vorgesehen. In der Praxis kommt es beim Aufbau derartiger großer Netze allerdings zu folgenden Problemen:
- Die Frequenzbereiche der Basisstationen überlappen sich und führen zu Störungen.
- Da - anders als in Mobilfunknetzen - die "Intelligenz" komplett im Client steckt, gibt es kein echtes Handover zwischen verschiedenen Basisstationen. Ein Client wird im Normalfall erst nach einer neuen Basisstation suchen, wenn der Kontakt zur vorherigen bereits abgebrochen ist.

Eine bekannte Lösung für dieses Problem bietet die Verlagerung der Kontrollfunktionen in die Basisstationen bzw. das WLAN-Netzwerk: Eine solche zentrale Instanz kann Frequenzen, Sendeleistung etc. besser steuern und z. B. auch einen "Handover" initiieren. Da die Basisstationen in einem solchen Szenario einen Teil ihrer Funktionalität verlieren und direkt mit der zentralen Instanz kommunizieren können müssen, wird an entsprechenden Geräteklassen (Lightweight Access Point) und Protokollen gearbeitet. Proprietäre Lösungen im Rahmen dieses so genannten "Infrastruktur-Modus" existieren bereits seit einigen Jahren, offene Standards (z. B. das Lightweight Access Point Protocol) sind dagegen immer noch in Arbeit. Diskussionen entzünden sich vor allem an der Frage, welches Gerät welche Funktionen übernehmen soll.

Einen anderen Lösungsansatz liefert der so genannte "Ad-hoc-Modus": In diesem Ad-hoc-Modus ist keine Station besonders ausgezeichnet, sondern alle Stationen sind gleichwertig. Ad-hoc-Netze lassen sich auf diese Weise schnell und ohne großen Aufwand aufbauen, für die spontane Vernetzung weniger Endgeräte sind allerdings andere Techniken (Bluetooth, Infrarot) eher gebräuchlich.

Die Voraussetzungen für den Ad-hoc-Modus sind dieselben wie für den Infrastruktur-Modus: Alle Stationen benutzen denselben Netzwerknamen ("Service Set Identifier", SSID) und optional dieselben Einstellungen für die Verschlüsselung. Da es in einem Ad-hoc-Netz keine zentrale Instanz (Access Point) gibt, muss deren koordinierende Funktion von den Endgeräten übernommen werden. Eine Weiterleitung von Datenpaketen zwischen den Stationen ist nicht vorgesehen und in der Praxis auch nicht ohne weiteres möglich, denn im Ad-hoc-Modus werden keine Informationen ausgetauscht, die den einzelnen Stationen einen Überblick über das Netzwerk geben könnten. Aus diesen Gründen eignet sich der Ad-hoc-Modus nur für eine sehr geringe Anzahl von Stationen, die sich wegen der begrenzten Reichweite der Sender zudem physisch nahe beieinander befinden müssen. Ist dies nicht der Fall, kann es vorkommen, dass eine Station nicht mit allen anderen Stationen kommunizieren kann, da diese schlicht kein Signal mehr empfangen.

Um dieses Problem zu beheben ist bekannt, daß die teilnehmenden Stationen mit Routing-Fähigkeiten ausgestattet werden, so dass sie in der Lage sind, Daten zwischen Geräten weiterzuleiten die sich nicht in Sendereichweite zueinander befinden. Erhebung und Austausch von Routing-Informationen ist Teil der Aufwertung eines Ad-hoc-Netzwerks zum mobilen Ad-hoc-Netzwerk: Softwarekomponenten auf jeder Station sammeln Daten (z. B. zur "Sichtbarkeit" anderer Stationen, Verbindungsqualität etc.), tauschen sie untereinander aus und treffen Entscheidungen für die Weiterleitung der Nutzdaten. Auch in diesem Bereich ist die Entwicklung noch nicht abgeschlossen und hat neben einer langen Liste von experimentellen Protokollen (AODV, OLSR, MIT RoofNet, B.A.T.M.A.N. etc.) und Standardisierungsvorschlägen (Hybrid Wireless Mesh Protocol, 802.11s) auch einige kommerzielle Lösungen (z. B. Adaptive Wireless Path Protocol von Cisco) hervorgebracht.

In Altbauwohnungen mit dicken Wänden stoßen außerdem derartige Funknetze überhaupt schnell an ihre Grenzen. Eine gute Alternative hierzu liefert ein Verbund an Clients mit einer Stromleitung. Der Vorteil dieser Lösung ist: Alle Leitungen sind bereits unter Putz verlegt und brauchen nur einen Netzadapter. Auch das Tempo von 200 MBit/s genügt selbst für HDVideos und große Datenmengen.

Bei der Installation gibt es allerdings zwei Problemfelder: Zum einen funktionieren die Geräte nur innerhalb eines Stromkreises. Wenn man etwa die Wohnungen in einem Mehrfamilienhaus verbinden will, muß zusätzlich auf eine herkömmliche LAN-Verkabelung zurückgreifen werden. Die weitere Stolperfalle liegt bei den Steckdosen selbst: Derartige Powerline-Komponenten benötigen normalerweise eine eigene Steckdose. Sind sie an einer Steckerleiste angeschlossen, verliert das Netzwerk stark an Geschwindigkeit.

Bekannt ist es, mit Hilfe eines Barcodes, welcher an einem Gerät angebracht ist, dieses Gerät in ein WLAN-Netz einzufügen, wobei jedoch übelicherweise offen bliebt, wie die Autorisierung dieses Geräts erfolgen soll. Weiterhin ist dieses Konzept nur für eine Verknüpfung eines Endgeräts mit einem drehtungebundenen Netzwerk bekannt, nicht aber mit einem drahtgebundenen mit Hilfe eines drahtungebundenen Netzwerks. Gängig sind bei derartigen Barcodesystemen in Speichern niedergelegte Gerätegruppen, oder Einzelgeräte mit Barcodes, welche auch die Gerätegruppen und deren Erlaubnis in das Netz einzutreten identifizieren. Alternative Lösungen interpretieren einfach das Faktum der physischen Nähe, z.B. an einem Anmeldepunkt definierten als generell gültige Autorisierung.

Weiterhin gibt es Lösungen die die Konfiguration eines drahtlosen z.B. (WIFI)-Netzwerks mit Hilfe eines drehtgebundenen Netzwerrks vorzunehmen. Derartige Lösungen beantworten aber die Frage nicht, wie Endgeräte (Haushaltsgeräte) mit Hilfe eines drahtungebundenen Netzwerrks an ein drahtgebundenes Netzwerk angebunden werden können.

Weiterhin sind Lösungen bekannt, indem zwei Geräte miteinander konfiguriert werden, indem sie aufeinander gesteckt werden. Dieses Konzept ist jedoch außerhalb von Geräten unbekannt.

Aufgabe ist es daher, eine alternative Lösung zur Erhöhung der Reichweite eines WLAN-Netzes und zum Anschluß möglichst vieler Clients an dieses Netz bereitzustellen

Diese Aufgabe wird gelöst durch den unabhängigen Anspruch.

Sie wird insbesondere gelöst durch ein Datenübertragungsnetzwerk, umfassend ein drahtloses Netzwerk und ein drahtgebundenes Netzwerk, wobei das drahtgebundene Netzwerk einen Speicher und der Speicher eine Datenbank umfasst und wobei die Daten zum Anschluß des drahtlosen Netzwerks an das drahtgebundene Netzwerk automatisiert der Datenbank des Speichers entnehmbar sind.

Dies geschieht mit Hilfe eines Datenübertragungsnetzwerks zum Anschluß eines elektrischen Geräts über ein erstens Netzwerk unter Hinzuziehung eines an ein zweites zweiten Netzwerks, wobei das zweite Netzwerk ein Netzwerk eines Hausstromnetzes ist und wobei das erste und das zweite Netzwerk ein physisch/physikalisch anderes Übertragungsmedium verwendet als das erste Netzwerk und wobei drahtloses Netzwerk und ein drahtgebundenes Netzwerk, wobei das zweite drahtgebundene Netzwerk eine Verarbeitungseinheit aufweist, sowie einen Speicher , und wobei der Speicher eine Datenbank umfasst und wobei die Daten zum Anschluß des des Gerätes an das erste Netzwerk drahtlosen Netzwerks an das drahtgebundene Netzwerk automatisiert der Datenbank des Speichers mit Hilfe der Verarbeitungseinheit entnehmbar sind, um dem anzuschließenden Gerät den Zutritt in das erste Netzwerke zu ermöglichen.

Wenn das drahtlose Netzwerk mit dem drahtgebundenen Netzwerk mit Hilfe der automatisiert der Datenbank des Speichers entnehmbaren Daten verbindbar ist, so bewirkt dies, dass die Anmelderoutine des drahtlosen Netzwerks am drahtgebundenen Netzwerk automatisch erfolgt. Dies gilt insbesondere dann, wenn das drahtlose Netzwerk ein Funknetzwerk ist. Unter einem "Funknetzwerk" sind vorliegend insbesondere folgende bidirektionale lokale Netzwerke zusammenfassbar:
- Funknetze für den unmittelbaren Umkreis einer Person (engl. wireless personal area network, Abk. WPAN)
- lokale Funknetze (engl. wireless local area network IEEE 802.11, Abk. WLAN)
- Stadtfunknetze (engl. wireless metropolitan area network IEEE 802.16, Abk. WMAN)
- Weitverkehrsfunknetze (engl. wireless wide area network, Abk. WWAN)

Ihnen ist gemeinsam, dass sie eine große Reichweite, eine hohe Datenrate, eine geringe Leistungsaufnahme und geringe Kosten sowie eine hohe Mobilität aufweisen. Das heißt, die Verbindung zum Funknetz kann aufrechterhalten werden, wenn sich der Teilnehmer bewegt. 1. Netzwerk und/oder Als Gerät auch ein access-pint bezeichenbar, der dazu dient das weitere Endgerät Wenn das erste Funknetzwerk ein WLAN-Netzwerk ist, bewirkt dies eine besondere Erleichterung, da die Inbetriebsetzung von WLAN-Netzwerken besonders komplex ist, weswegen eine automatisierte Integration eines WLAN-Netzwerks in ein drahtgebundenes Netzwerk besonders vorteilhaft ist.

Bei WLAN übernimmt eine spezielle Basisstation (Access Point) die Koordination aller anderen Netzknoten (Clients). Die Basisstation sendet in einstellbaren Intervallen (üblicherweise zehnmal pro Sekunde) kleine Datenpakete, so genannte "Beacons" (engl. "Leuchtfeuer"), an alle Stationen im Empfangsbereich. Die Beacons enthalten u. a. folgende Informationen:
* Netzwerkname ("Service Set Identifier", SSID),
* Liste unterstützter Übertragungsraten,
* Art der Verschlüsselung.

Dieses "Leuchtfeuer" dient dazu, den Verbindungsaufbau zu erleichtern, da jeder Client lediglich den Netzwerknamen und optional einige Parameter für die Verschlüsselung kennen muß.

Zusätzlich ermöglicht ein derartiger Versand an Beacon-Paketen die Überwachung der Empfangsqualität und zwar auch dann, wenn keine Nutzdaten gesendet oder empfangen werden.

Beacons werden immer mit der niedrigsten Übertragungsrate (1 MBit/s) gesendet, der erfolgreiche Empfang des "Leuchtfeuers" garantiert daher noch keine stabile Verbindung mit dem Netzwerk.

Zur Reichweitenerhöhung bestehender Funknetze bzw. Verbindung kabelgebundener Netze via Funk (Wireless Bridging) existieren im Rahmen des so genannten "Wireless Distribution System" (WDS) verschiedene Methoden.

Ein Wireless Distribution System bzw. Wireless Distributed System, ist ein Funknetzwerk aus mehreren WLAN-Basisstationen (Wireless Access Point, AP). Mit einem WDS kann man eine größere Netzabdeckung erreichen als mit einem einzelnen Zugriffspunkt, ohne eine Verkabelung aller Basisstationen. Einzig die Stromversorgung jeder einzelnen Basisstation ist erforderlich. WDS kann über eine einzelne WLAN-Schnittstelle am AP genauso integriert werden wie über mehrere.

Das Single-Radio-WDS nutzt technisch gesehen die WLAN-Schnittstelle sowohl für die Verbindung zu einem benachbarten Zugriffspunkt als auch für die Versorgung der WLAN-Nutzer (Clients). Dabei wird die Datenübertragungsrate der Schnittstelle halbiert, weil die Pakete doppelt übertragen werden müssen. Darum lässt sich WDS besser mit Dual-Radio-Zugriffspunkten realisieren. Dabei wird ein Sender im AP zur Anbindung des nächsten Zugriffspunktes verwendet, ein zweiter für die Clients.

Alternativ bzw. ergänzend lassen sich zwar durch komplexere Techniken wie Richtfunk, Beamforming oder Mehrwegeausbreitung (MIMO) einsetzen um eine Verringerung der Bandbreite selbst bei Verwendung eines einzelnen Funkkanals zu verringern oder gar zu verhindern. Im Optimalfall verwendet man in diesem Zusammenhang Sender mit unterschiedlichen Standards (z. B. 802.11a, 802.11b/802.11g und 802.11n). Den einzelnen Zugriffspunkten müssen die WLAN-MAC-Adressen der anderen Zugriffspunkte bekannt sein. Außerdem sollte jeder dieselbe SSID (für WPA-Verschlüsselung zwingend), denselben Kanal und denselben Netzwerkschlüssel (WPA oder das unsichere WEP) verwenden, da ansonsten Roaming bzw. Handover, also der "fliegende" Wechsel von einem zum anderen Zugriffspunkt, nicht möglich ist.

Da WLAN auf der Sicherungsschicht (Schicht 2 im OSI-Modell) dieselbe Adressierung wie Ethernet verwendet, kann über einen Wireless Access Point mit Ethernet-Anschluss zwar auch eine Verbindung zu kabelgebundenen Netzen (im WLAN-Jargon "Distribution System", DS) hergestellt werden, dies ist jedoch nicht mehr ohne weiteres der Fall, wenn das Netz ein Hausstromnetz und nicht ein originäres Ethernet-Netz ist, wie es beispielsweise beim Hausstromnetz der Fall ist. Eine Ethernet-Netzwerkkarte kann folglich nicht unterscheiden, ob sie mit einer anderen Ethernet-Netzwerkkarte oder (über einen Access Point) mit einer WLAN-Karte kommuniziert. Allerdings muss zwischen 802.11 (WLAN) und 802.3 (Ethernet) konvertiert werden.

Im Fall, dass das drahtgebundene Netzwerk das Hausstromnetz ist, hat dies den Vorteil, dass auf eine bereits verlegte Kabelinfrastruktur zurückgegriffen werden kann. Wenn ein drahtgebundenes und ein drahtungebundenes Netzwerk zusammengeschalten werden, so handelt es sich hierbei um Netzwerke mit zwei physisch/physikalisch anderen

Übertragungsmedien im Sinne des Anspruchs 1. Erfindungsgemäß wird daher vorgeschlagen, längere Strecken, oder Bereiche, welche baulich voneinander getrennt sind mit Hilfe der Einbeziehung des Stromnetzes als Überragungsmittel zu überbrücken. Diese Kabelinfrastruktur kann auf diversen Wegen zur Übermittlung von Daten genutzt werden, wie beispielsweise mit Hilfe einer HF-Modulation oder mit Hilfe einer Wirkleistungsmodulation/Spannungsmodulation/Strommodulation.

Hierdurch grenzt sich das erfinderische Konzept auch von Telekommunikationsnetzwerken ab, bei welchen das Endgerät am äußeen Netz angemdeldet ist und nicht an weiteren inneren Netzen und welche vom äußeren Netz lediglich Gesprächsinformationen weitergibt.

Zwar ist es beispielsweise mit Hilfe des So genannten Powerline-Konzepts ein Ethernetnetzwerk mit Hilfe eines Powerline-Adapters an ein Hausstromnetz anschließbar; dies hat jedoch den Nachteil, da das Powerline-Konzept mit Hilfe von HF betrieben wird, dass man hierdurch unfreiwillig das Hausstromnetz zur HF-Antenne aufrüstet.

Einen alternativen Weg zur Datenübertragung über das Hausstromnetz stellt die so genannte "Wirkleistungsmodulation" (z.B. WO WO05124477) oder Spannungsmodulation (vgl. DE 20 2010 004 850.8) oder Strommodulation (vgl. DE 20 2010 005 953.4) bereit.

Erfindungsgemäß ist es daher auch nicht mehr nötig, z.B. die physische Nähe als Autorisierungsnachweis zu nutzen, da das WLAN diese nur schwer einschätzen kann.

Erfindungsgemäß wird vielmehr überprüft bzw. mit Hilfe der im zweiten Netzwerk verorteten Datenbank überprüft, ob ein anzumeldendes Gerät (über das erste Netzwerk) selbst in das zweite Netzwerk eintreten darf. Ein Konzept ist hierbei pro Stromkreis (z.B. pro Raum ein Stromkreis) eine eigene Geräteverwaltung zu ermöglichen. Mehrere Räume / Stromkreise werden dann über Modulatoren miteinander koppelbar, wobei die Modulatoren miteinander kommunizieren (z.B. über Wirkleistungsmodulation / Spannungsmodulation / Strommodulation)

Eine Anmelderoutine kann wie folgt aussehen: ein jedes Gerät (Haushaltsgerät) hat eine eigene Gerätenummer, umfassend Gerätecharakteristika, z.B. DsID genannt. Diese Nummer wird mit den im Speicher abgelegten Nummern z.B. mit Hilfe einer Vergleichsvorrichtung verglichen. Bei positiven Vergleichsergebnis (z.B. das Gerät gehört zur Gruppe der generell erlaubten Kühlschränke des Herstellers z, für den eine Freigabe für alle Kühlschränke ab dem Jahr abcd existiert) erhält das Gerät über das zweite Netzwerk zum ersten Netzwerk und damit die Freigabe alle Art von Daten zu transferieren. Zuvor hatte es nur die Möglichkeit die Anmeldenummer zu transferieren, mehr nicht. Hierfür teilt z.B. der Modulator dem ELAN mit, daß die DsID des Geräts autorisiert wurde, um auf das WLAN zuzugreifen. Diese basale Kommunikation kann statt über das erste Netzwerk (also das Funknetzwerk) alternativ auch über Koppeln mit der Stromversorgung erfolgen, wodurch das erste Netzwerk mit Hilfe der Stromleitung parallelgeschalten wird. Demnach ist in diesem Fall die Anmeldesequenz: zuerst mit Hilfe eines Steckers eine Verbindung herstellen und dann das WLAN freischalten. Das Gerät kann hierbei die WLAN-Konfigurationsdaten über den Steckvorgang beziehen. Hierdurch könnte dann parallel zur Steckverbindung über5 die Stromversorgung die Koppelung des Geräts mit dem WLANNetz erfolgen. Das Gerät transferiert also vom DsID über WLAN und/oder Stromversorgung die eigenen Gerätedaten an das erste Netzwerk (bzw. den Speicher darin zum Vergleich) und erhält vom ersten Netzwerk die Zugangsdaten des WLAN und das WLAN erhält die die Aufforderung dieses Gerät herein zu lassen. Erfindungsgemäß erfolgt daher der Eintritt des Geräts in das erste Netzwerk, welches das äußere, z.B. nicht drahtgebundene, also dasjenige ist, in welchem der Speicher und die Verarbeitungseinheit sich nichtbefinden. Fakultativ könnte hierbei das Gerät seinerseits ein drahtloses Netzwerk darstellen, mit dem dann weitere Geräte verbunden werden können.

Als Geräte kommen in erster Linie Haushaltsgeräte in Frage, und/oder Unterhaltungselektronische Geräte und/oder Kommunikationsgeräte.

Betreffend der Modi, in welchen der WLAN betrieben wird, wird unterschieden zwischen dem Bridging-Modus (Direktverbindung, Point-to-Point), bei dem zwei als WLAN-Bridges konfigurierte Access Points ausschließlich miteinander kommunizieren (ohne dass sich weitere Clients verbinden können) und dem Repeating-Modus, bei dem mehrere Zugriffspunkte untereinander über WDS verbunden sind und sich zusätzlich WLAN-Clients verbinden dürfen (Point-to-Multipoint). Im letzteren Modus kann somit das WLAN "erweitert" werden, allerdings arbeiten die meisten Geräte hier nur mit der nicht sicheren WEP-Verschlüsselung.

Vergleicht man diese konventionellen Reichweitenerweiterungen, so ergibt sich folgende Übersicht:

| | **Wireless Distribution System (WDS)** | **Universal Repeater Mode** |
|---|---|---|
| Funktion | Bridge zwischen Access Points | Repeater agiert als Client |
| Konfiguration | Einstellung auf beiden Access Points notwendig | Einstellung nur auf Repeater (Client) notwendig |
| Gleicher WLAN-Kanal notwendig | Ja | Ja |
| Halbierung der WLAN- Bandbreite | Ja | Ja |
| Verschlüsselung | Nur WEP(WPA nur proprietär unter gleichen Herstellern möglich) | WEP, WPA, WPA2 |
| Gleiche SSID notwendig | Ja | Nein |
| Roaming zwischen Access Points möglich | Ja | Nein |

Für drahtlose Netzwerke sind bisher zwei lizenzfreie Frequenzblöcke aus den ISM-Bändem freigegeben worden:

| **Standard** | **Frequenzen** | **Kanäle** |
|---|---|---|
| IEEE 802.11a | 5,15 GHz bis 5,725 GHz | Kanäle: 19, alle überlappungsfrei, in Europa mit TPC und DFS nach 802.11h |
| IEEE 802.11b/g | 2,4 GHz bis 2,4835 GHz | Kanäle: 11 in den USA, 13 in Europa, 14 in Japan, 3 (in Japan maximal 4) Kanäle überlappungsfrei nutzbar. |

Die Frequenzzuteilungen im 2,4-GHz-Band und im 5-GHz-Band verteilen sich wie folgt.

| **1. Frequenznutzungs bestimmungen Frequenzbereich in MHz** | **Maximal zulässige mittlere äquivalente isotrope Strahlungsleistung in W (EIRP)¹⁾** | **Maximal zulässige spektrale Strahlungsleistungsdichte in mW/MHz (EIRP)¹⁾** | **Weitere Bestimmungen** |
|---|---|---|---|
| 5150-5250 | 0.2 | 0.25/0.025 ²⁾ | Nutzung ausschließlich innerhalb geschlossener Räume ⁴⁾ |
| 5250-5350 | 0.2 | 10/1,0 ³⁾ | Nutzung ausschließlich innerhalb geschlossener Räume ⁴⁾ Leistungsregelung |
| | | | ⁵⁾ Dynamisches Frequenzwahlverfa ⁶⁾ hren |
| 5470 - 5725 | 1,0 | 50 / 1,0 ³⁾ | Nutzung innerhalb und außerhalb geschlossener ⁷⁾ Räume Leistungsregelung ⁵⁾ Dynamisches Frequenzwahlverfa ⁶⁾ hren |

1) Die angegebenen Grenzwerte für die maximal zulässige mittlere äquivalente isotrope Strahlungsleistung (EIRP) und für die maximal zulässige spektrale Strahlungsleistungsdichte beziehen sich auf die WAS/WLAN-Funkstelle, wobei sich bei gepulsten Aussendungen der Mittelwert bei dem maximal möglichen Pegel (0 dB Leistungsreduzierung) auf den Puls bezieht. Es darf keiner der beiden Grenzwerte überschritten werden. Abhängig von der Kanalbandbreite ist der jeweils strengere Wert maßgebend. Falls die Aussendung über mehrere Antennen einer WAS/WLAN-Funkstelle gleichzeitig erfolgt, ist die Summenleistung bezogen auf die Funkstelle maßgebend.
2) Innerhalb eines beliebigen 0,025-MHz-Teilbereichs.
3) Innerhalb eines beliebigen 1-MHz-Teilbereichs.
4) Nutzung innerhalb allseits umschlossener Gebäude einschließlich vergleichbarer Orte bei denen die Abschirmung durch die Außenhaut für die erforderliche Dämpfung sorgt. Die Nutzung innerhalb von Luftfahrzeugen wird ebenfalls als Nutzung innerhalb geschlossener Räume angesehen.
5) Bei der Nutzung von Kanälen innerhalb der Frequenzbereiche 5250 - 5350 MHz und 5470 - 5725 MHz ist eine Leistungsregelung erforderlich, womit eine durchschnittliche Reduzierung um 3 dB mit Bezug auf die maximal zulässige Strahlungsleistung (EIRP) bzw. die korrespondierende maximal zulässige Strahlungsleistungsdichte bei WAS/WLAN-Systemen erreicht werden kann. Falls keine Leistungsregelung vorgesehen ist, gelten innerhalb der Frequenzbereiche 5250 - 5350 MHz und 5470 - 5725 MHz für die WAS/WLAN-Funkstellen um 3 dB reduzierte Grenzwerte gegenüber den maximal zulässigen Grenzwerten.
6) Das dynamische Frequenzwahlverfahren dient insbesondere der Vermeidung von Gleichkanalbetrieb mit Radarsystemen. Außerdem soll damit erreicht werden, dass die Wahrscheinlichkeit zur Nutzung eines bestimmten Kanals für alle verfügbaren Kanäle gleich groß ist und die Verkehrslast innerhalb der genutzten Frequenzbereiche gleichmäßig verteilt wird.
7) Funkübertragungsstrecken zwischen WAS/WLAN-Funkstellen an Bord von Luftfahrzeugen und Funkstellen außerhalb von Luftfahrzeugen (z. B. am Boden) sind nicht gestattet.

Die Kanalbandbreite beträgt bei allen Standards 20 MHz.

Hierbei ergeben sich theoretisch folgende Datenübertragungsraten:

| | |
|---|---|
| IEEE 802.11 | 2 Mbit/s maximal |
| IEEE 802.11a | 54 Mbit/s maximal (108 Mbit/s bei 40 MHz Bandbreite proprietär) |
| IEEE 802.11b | 11 Mbit/s maximal (22 Mbit/s bei 40 MHz Bandbreite proprietär, 44 Mbit/s bei 60 MHz Bandbreite proprietär) |
| IEEE 802.11g | 54 Mbit/s maximal (g+ =108 Mbit/s proprietär, bis 125 Mbit/s möglich) |
| IEEE 802.11h | 54 Mbit/s maximal (108 Mbit/s bei 40 MHz Bandbreite) |
| IEEE 802.11n 2,4 GHz und 5 GHz | 300 Mbit/s maximal (Verwendung von MIMO-Technik) |

Betreffend dieser Datenübertragungsraten ist zu berücksichtigen, dass sich alle Geräte im Netz die Bandbreite für Up- und Download teilen. Darüber hinaus sind die angegebenen Datenübertragungsraten Bruttowerte, und selbst unter optimalen Bedingungen liegt die erreichbare Netto-Übertragungsrate nur wenig über der Hälfte dieser Angaben. Im Mischbetrieb (802.11b + g) kann die Übertragungsrate gegenüber dem reinen 802.11g-Betrieb deutlich einbrechen. Praktisch sind jedoch folgende *Netto-Datenübertragungsraten* unter optimalen Bedingungen realistisch erreichbar:
IEEE 802.11a 20-22 Mbit/s
IEEE 802.11b 5-6 Mbit/s
IEEE 802.11g 20-22 Mbit/s
IEEE802.11n 100-120 Mbit/s

### Frequenzen und Kanäle:

| **Kanal Nummer** | **Frequenz(GHz)** | **Erlaubt in** |
|---|---|---|
| 1 | 2,412 | Europa, USA, Japan |
| 2 | 2,417 | Europa, USA, Japan |
| 3 | 2,422 | Europa, USA, Japan |
| 4 | 2,427 | Europa, USA, Japan |
| 5 | 2,432 | Europa, USA, Japan |
| 6 | 2,437 | Europa, USA, Japan |
| 7 | 2,442 | Europa, USA, Japan |
| 8 | 2,447 | Europa, USA, Japan |
| 9 | 2,452 | Europa, USA, Japan |
| 10 | 2,457 | Europa, USA, Japan |
| 11 | 2,462 | Europa, USA, Japan |
| 12 | 2,467 | Europa, Japan |
| 13 | 2,472 | Europa, Japan |
| 14 | 2,484 | Japan |

| **Kanal Nummer** | Frequenz **(GHz)** | **Erlaubt in** |
|---|---|---|
| 36 | 5,180 | EU, USA, Japan |
| 40 | 5,200 | EU, USA, Japan |
| 44 | 5,220 | EU, USA, Japan |
| 48 | 5,240 | EU, USA, Japan |
| 52 | 5,260 | EU, USA |
| 56 | 5,280 | EU, USA |
| 60 | 5,300 | EU, USA |
| 64 | 5,320 | EU, USA |
| 100 | 5,500 | EU |
| 104 | 5,520 | EU |
| 108 | 5,540 | EU |
| 112 | 5,560 | EU |
| 116 | 5,580 | EU |
| 120 | 5,600 | EU |
| 124 | 5,620 | EU |
| 128 | 5,640 | EU |
| 132 | 5,660 | EU |
| 136 | 5,680 | EU |
| 140 | 5,700 | EU |
| 147 | 5,735 | USA |
| 151 | 5,755 | USA |
| 155 | 5,775 | USA |
| 167 | 5,835 | USA |

Der Bereich 5150-5350 MHz darf in Deutschland nur in geschlossenen Räumen genutzt werden. Der Bereich 5250-5725 MHz kann mit einer Sendeleistung von bis zu 1 W genutzt werden, wenn Leistungsreglung und dynamisches Frequenzwahlverfahren verwendet werden.

Gemäß dem Standard IEEE 802.11b bzw. 802.11g steht der WLAN-Anwendung eine Gesamtbandbreite von 60 MHz (mit geringfügigen Unterschieden in den einzelnen Ländern der EU) zur Verfügung. Ein einzelner WLAN-Kanal benötigt ein Frequenzband von 20 MHz Breite. Das bedeutet, dass lediglich drei der 11 (USA), 13 (Europa) bzw. 14 (Japan) Kanäle gleichzeitig ohne Einschränkungen innerhalb derselben Ausleuchtzone verwendet werden können. Diese drei Kanäle werden in den meisten Literaturquellen als "überlappungsfreie" Kanäle bezeichnet. In den USA sind dies die Kanäle 1, 6 und 11, in Europa und Japan die Kanäle 1, 7 und 13. Es können jedoch sechs Strecken eingerichtet werden, wenn drei in vertikaler und drei in horizontaler Polarisation betrieben werden. Die drei mit der horizontalen Polarisation sollten jedoch wenigstens einen Kanal neben denen mit vertikaler Polarisation liegen. Also z. B. 1, 6 und 11 mit der einen und 2, 7 und 12 (noch besser 3, 8 und 13) mit der anderen Polarisation. Mindestabstand für den Betrieb mit gleicher Polarisation sind also fünf Kanäle. Ferner ist zu berücksichtigen, dass die WLAN-Kanäle 9 und 10 nahezu identische Frequenzen wie haushaltsübliche Mikrowellenherde (2,455 GHz) aufweisen und dadurch zeitweilig ein vollständiger Verbindungszusammenbruch möglich ist. Mit Leistungseinbußen kann durch Frequenzspreizung mittels Direct Sequence Spread Spectrum auch ein Betrieb mit geringerem Kanalabstand möglich sein.

Die zulässige effektive Strahlungsleistung (EIRP) von 100 mW (2,4 GHz) bzw. 500 mW (5,4 GHz) handelsüblicher 802.11-Endgeräte lässt 30 bis 100 Meter Reichweite auf freier Fläche erwarten. Einige WLAN-Geräte erlauben auch den Anschluss einer externen Antenne. Mit externen Rundstrahlantennen lassen sich bei Sichtkontakt 100 bis 300 Meter im Freien überbrücken. In Sonderfällen lassen sich sogar 90 Meter durch geschlossene Räume erreichen. Die Reichweite ist jedoch stark von Hindernissen sowie Art und Form der Bebauung abhängig. Betreffend der Abschirmleistung von Wänden ist aber nicht in erster Linie deren Dicke ausschlaggebend, sondern vielmehr ihre Materialzusammensetzung und ihr Aufbau.

Metalle werden beispielsweise nicht durchdrungen. Je stärker die elektrische Leitfähigkeit des Materials, desto stärker ist die Dämpfung.

So mindern auch insbesondere Leichtbauwände die Reichweite durch Dämpfung, und können - je nach verwendetem (Metall-)Trägerbau sowie Art der Unterfolie ein großes Hindernis darstellen.

Insbesondere Stein- und Betonaußenwände dämpfen, vor allem durch Feuchtigkeit bedingt, stark - ebenso wie metallbedampfte Glastüren/Brandschutzkonstruktionen.

Oberflächen können außerdem auch als Reflektor wirken, um Funklöcher "auszuspiegeln" - je höher die Leitfähigkeit und je größer die Fläche, desto besser. Leitende Gegenstände in der Nähe von Antennen können deren Richtcharakteristik stark beeinflussen.

Auch dicht belaubte Bäume dämpfen die Signalstärke bei WLAN-Verbindungen.

WLAN nach IEEE 802.11h (maximal 54 Mbit/s brutto) arbeitet im 5-GHz-Band, in dem ein größerer Frequenzbereich (455 MHz Bandbreite) zur Verfügung steht und damit 19 nicht überlappende Frequenzen (in Deutschland) lizenzfrei nutzbar sind.

Im Normalbetrieb sind in Gebäuden nach IEEE 802.11h 200 mW effektive Strahlungsleistung (EIRP) erlaubt. Jedoch nur ein kleiner Teil des Frequenzbereichs ist ohne strengere Auflagen (TPC, Transmitter Power Control und DFS, Dynamic Frequency Selection) nutzbar. Im Freien ist ebenfalls nur ein kleiner Frequenzbereich mit TPC und DFS erlaubt. In diesem sind auch höhere effektive Strahlungsleistungen bis 1 Watt EIRP gestattet. TPC und DFS sollen sicherstellen, dass Satellitenverbindungen und Radargeräte nicht gestört werden (World Radio Conference 2003). Dies und die höheren Kosten der Hardware aufgrund der höheren Frequenz bewirken, dass sich 802.11 a noch nicht gegen 802.11 b oder g durchgesetzt hat. Gängige WLAN-Geräte für 2,4 GHz haben Sendeleistungen von 13-16 dBm (20-40 mW). Da 20 dBm (100 mW) EIRP erlaubt sind, hat man bei Verwendung einer Dipolantenne (2 dBi Gewinn) die Möglichkeit, die Sendeleistung bis auf ca. 60 mW zu erhöhen, ohne die EIRP-Grenze zu überschreiten. Das geht bei einigen APs mit regulierbarer Sendeleistung.

Man kann auch Rundstrahler mit Gewinn (vertikale Bündelung) oder Richtantennen verwenden. Abzüglich der Kabeldämpfung können diese 5 bis 10 dBi Gewinn haben und eine Verstärkung des Funkfeldes in eine Richtung auf Kosten der anderen Richtungen bewirken. Dabei wird aber evtl. die zulässige EIRP überschritten. Auf diese Weise lässt sich z. B. mit 6 dB Gewinn (vierfache EIRP) die Reichweite verdoppeln.

Einige WLAN-Geräte beherrschen auch Antenna-Diversity-Modi. Hierbei werden die durch Interferenzen verursachten Fehler verringert, indem zwei Antennen abwechselnd zum Empfang bzw. zum Senden verwendet werden. Dabei wird sehr schnell auf die Antenne umgeschaltet, die das stärkere Signal liefert. Die zwei Antennenanschlüsse können auch streng getrennt zum Senden und Empfangen genutzt werden. Das hat den Vorteil, zum Empfangen eine Antenne höheren Gewinns verwenden zu können, die bei Verwendung auf der Sendeseite die zulässige Strahlungsleistung überschreiten würde.

Zur Verbindung eines WLAN-Gerätes mit einer zugehörigen Antenne werden koaxiale Steckverbinder verwendet. Bei WLAN sind dies hauptsächlich die sonst selten verwendeten RP-TNC- und RP-SMA-Steckverbinder. Die FCC ordnete für WLAN die Verwendung von besonderen Koaxialsteckern an, um den (versehentlichen) Anschluss von nicht für WLAN gedachten Antennen durch den Endanwender zu verhindern.

Die Kabeldämpfung spielt bei den verwendeten Frequenzen eine erhebliche Rolle. So hat z. B. dämpfungsarmes H155-Kabel bei 2,4 GHz eine Dämpfung von 0,5 dB/m.

Erfindungsgemäß werden diese Nachteile dadurch behoben, dass durch die Verbindung eines drahtlosen Netzwerks mit einem drahtgebundenen Netzwerk die zum Durchdringen von Wänden bzw. zur Erhöhung der Reichweite Sendeleistung reduziert werden kann.

Betreffend der Datensicherheit ist zu beachten, dass auch die Schnittstelle zwischen einem drahtlosen und einem drahtgebundenen Netzwerk gegen Eindringlinge zu sichern ist. Ohne Maßnahmen zur Erhöhung der Informationssicherheit sind drahtlose, lokale Netzwerke nämlich Angriffen ausgesetzt, wie zum Beispiel beim Snarfing oder bei Man-In-The-Middle-Angriffen. Es ist daher erforderlich, dies mit entsprechenden Mitteln, insbesondere durch die Verwendung von Verschlüsselung und Kennwörtern (Authentifizierung) zu verhindern oder zumindest deutlich zu erschweren.

Betreffend der Verschlüsselung ist Wired Equivalent Privacy (WEP) bereits Teil des WLAN-Standards IEEE 802, der den RC4-Algorithmus enthält. Die darin enthaltene Verschlüsselung mit einem nur 40 Bit (64 Bit genannt) bzw. 104 Bit (128 Bit genannt), bei einigen Herstellern auch 232 Bit (256 Bit genannt) langen statischen Schlüssel reicht jedoch nicht aus, das WLAN ausreichend zu sichern. Durch das Sammeln von Schlüsselpaaren sind Known-Plaintext-Angriffe möglich. Es gibt frei erhältliche Programme, die sogar ohne vollständigen Paketdurchlauf in der Lage sind, einen schnellen Rechner vorausgesetzt, das Passwort zu entschlüsseln. Jeder Nutzer des Netzes kann den gesamten Verkehr zudem mitlesen. Die Kombination von RC4 und CRC wird als kryptografisch unsicher betrachtet.

Aus diesen Gründen sind technische Ergänzungen entwickelt worden, etwa WEPplus, Wi-Fi Protected Access (WPA) als Vorgriff und Teilmenge zu 802.11i, Fast Packet Keying, Extensible Authentication Protocol (EAP), Kerberos oder High Security Solution, die alle mehr oder weniger gut das Sicherheitsproblem von WLAN verkleinern.

Der Nachfolger des WEP ist der neue Sicherheitsstandard 802.11i. Er bietet eine erhöhte Sicherheit durch die Verwendung von TKIP bei WPA bzw. Advanced Encryption Standard (AES) bei WPA2 und gilt zurzeit als nicht zu entschlüsseln, solange keine trivialen Passwörter verwendet werden, die über eine Wörterbuch-Attacke geknackt werden können. Als Empfehlung kann gelten, mit einem Passwortgenerator Passwörter zu erzeugen, die Buchstaben in Groß- und Kleinschreibung, Zahlen und Sonderzeichen enthalten und nicht kürzer als 32 Zeichen sind.

WPA2 ist das Äquivalent der Wi-Fi Alliance zu 802.11 i, das mit dem Verschlüsselungsalgorithmus AES (Advanced Encryption Standard mit Schlüssellängen von 256 Bit) arbeitet und in neueren Geräten meist unterstützt wird. Einige Geräte lassen sich durch Austausch der Firmware mit WPA2-Unterstützung nachrüsten. Jedoch erfolgt hier meist die Verschlüsselung ohne Hardwarebeschleunigung, so dass dieser Zugewinn an Sicherheit durch eine starke Einbuße bei der Übertragungsrate erkauft wird.

Eine alternative Herangehensweise besteht darin, die Verschlüsselung komplett auf IP-Ebene zu verlagern. Hierbei wird der Datenverkehr beispielsweise durch die Verwendung von IPsec oder durch einen VPN-Tunnel geschützt. Besonders in freien Funknetzen werden so die Inkompatibilitäten verschiedener Hardware umgangen, eine zentrale Benutzerverwaltung vermieden und der offene Charakter des Netzes gewahrt.

Beim so genannten WarWalking (oder beim Abfahren ganzer Gegenden mit dem Auto Wardriving genannt) werden mit einem WLAN-fähigen Notebook oder PDA offene WLANs gesucht. Diese können mit Kreide markiert werden (WarChalking). Das Ziel ist hierbei, Sicherheitslücken aufzudecken und dem Betreiber zu melden und die Verbreitung von WLAN zu untersuchen, oder dies zum eigenen Vorteil (kostenlos und unter fremdem Namen surfen) auszunutzen.

Betreffend der Authentifizierung wird bei WLAN das Extensible Authentication Protocol genutzt. Hierbei handelt es sich um ein Protokoll zur Authentifizierung von Clients. Es kann zur Nutzerverwaltung auf Radius-Server zurückgreifen. EAP wird hauptsächlich innerhalb von WPA für größere WLAN-Installationen eingesetzt.

Eine Authentifizierung ist auch über die MAC-Adresse der drahtlosen Netzwerkadapter möglich. Die MAC-Adresse ist eine Hardware-Kennung anhand derer sich jeder angeschlossene Netzwerkadapter identifizieren lässt. Die meisten APs bzw. Router bieten die Möglichkeit, den Zugriff nur für bestimmte MAC-Adressen zu ermöglichen. Allen nicht zugelassenen MAC-Adressen wird dann keine IP-Adresse zugewiesen, bzw. der Zugriff auf den AP ist blockiert. Eine alleinige Sicherung über MAC-Adressen-Filterung ist jedoch nicht sicher, da sich solche Adressen problemlos einstellen lassen. Gültige MAC-Adressen können z. B. durch das Mitlauschen des Datenverkehrs anderer Teilnehmer gefunden werden. Aber auch Verschlüsselungen lassen sich auf diese Weise knacken.

Im Fall, dass die Daten zum Anschluß des Routers und/oder mindestens eines Clients des drahtlosen Netzwerks automatisiert der Datenbank eines Speichers entnehmbar sind, bewirkt dies, dass nicht nur das anderen Netzwerk erkannt wird, sondern dass auch gleich die neuen Clients in das Gesamtnetzwerk eingebunden werden können. Im Fall, dass aus einem drahtlosen Netzwerk und einem drahtgebundenen Netzwerk ein Gesamtnetzwerk gestaltet wird, bestehen beide Netzwerke nicht mehr unabhängig voneinander fort. Als Speicher sind insbesondere nichtflüchtige Speicher geeignet.

WLAN-Netzwerke umfassen in der Regel bereits einen Router. Router sind Geräte aus dem Bereich Computernetzwerke, Telekommunikation und Internet, die mehrere Rechnernetze - je nach Sichtweise - koppeln oder trennen. Dabei analysiert der Router die ankommenden Datenpakete nach ihrer Zieladresse und blockt diese oder leitet sie entsprechend weiter (die Pakete werden geroutet). Weitergeleitete Pakete gelangen entweder in ein dem Router selbst bekanntes, direkt angeschlossenes Zielnetz (auch Ziel-Subnetze) oder werden zu einem ebenfalls in einem direkt angeschlossenen Netz liegenden Router weitergereicht.

Als WLAN-Router wird häufig die Kombination aus Access Point und Router bezeichnet. Das ist solange korrekt, soweit es einen WAN-Port gibt. Das Routing findet dann zwischen WLAN und WAN (und falls vorhanden auch zwischen LAN und WAN) statt. Fehlt dieser WAN-Port, handelt es sich hier lediglich um Marketing-Begriffe, da reine Access Points auf OSI-Ebene 2 arbeiten und somit Bridges und keine Router sind. Häufig sind auch WLAN-Router keine vollwertigen Router, sie haben oft die gleichen Einschränkungen wie DSL-Router (PPPoE, NAT - siehe oben).

Um ein Gerät in das bestehende drahtungebundene Netzwerk einzubindenden, (wobei das Gerät auch ein Routers (Access-point) und/oder mindestens eines Client aufweist) und um ihn in das bestehende drahtgebundene Netzwerk einzubinden, sind die hierfür notwendigen Daten bereits in einem Speicher hinterlegt, der wiederum Teil des drahtgebundenen Netzwerks ist. Hierbei kann fakultativ das drahtgebundene Gerät auch Teil des das Hausstromnetzes sein (z.B. bei Herstellen einer Spannungsversorgung) , über welches Daten beispielswiese mit Hilfe von "Digitalstrom" dann übertragen werden können. Auf diese Weise behält der Inhaber des Haustromnetzes die volle Kontrolle über die an sein drahtungebundndes Netz an das Hausstromnetz angeschlossenen Geräte.

Im Fall, dass im Datenübertragungsnetzwerk mindestens ein Client ein Hausgerät und/oder ein tragbares Hausgerät (wie z.B. ein batteriebetriebenes WLAN-Radio) ist, ist es möglich Hausgeräte mit dem drahtgebundenen Netzwerk des Hausgerätestromnetzes zu verbinden, wenn das Gerät physisch nicht über sein Stromkabel mit dem Hausstromnetz verbunden ist. Das ist beispielsweise der Fall, wenn ein Hausgerät von der Stromversorgung abgekoppelt, verrückt, und wieder an die Stromversorgung angekoppelt wird. Dies gilt insbesondere für Geräte, welche keine permanente Verbindung mit dem Stromnetz aufweisen, wie beispielsweise batteribetriebene tragbare Geräte.

Dadurch daß ein solches Datenübertragungsnetzwerks, wobei die Verbindung von drahtungebundenem Netzwerk und drahtgebundenem Netzwerk mindestens zwei voneinander unabhängige Sicherheitsebenen umfasst, betrieben wird, wird bewirkt, dass eine besonders hohe Sicherheit gewährleistet ist.

Im Falle einer Verbindung zweier Netzwerke nach dem Stand der Technik muß, vorausgesetzt, dass die Verschlüsselung die selbe ist, auf beiden Seiten ein Kennwort von Hand eingetragen werden, oder das Kennwort muß zumindest von Hand in die Basisstation eingegeben werden, welche dann aber zusätzlich die Autorisierung umfasst, dieses anschließend an Clients weiterzugeben. Eine alternative Möglichkeit ist, daß anzuschließenden Clients die Funktion umfassen, dieses Passwort von der Basisstation entgegenzunehmen. In jedem Fall handelt es sich um ein einstufiges Sicherheitssystem, da lediglich das Passwort diese Sicherheit bereitstellt. Naturgemäß spielt bei derartigen einstufigen Sicherheitssystemen der Stromkreis keine Rolle, weswegen im Stand der Technik jeder Client an jeden Versorgungsstromkreis angeschlossen werden kann. Selbst im Fall, dass der Stromkreis mit Hilfe des Powerline-Konzepts zur Übertragung von Daten genutzt werden könnte, ist das einstufige Sicherheitskonzept hierbei das selbe. Da "Powerline" aber mit Hilfe von Hochfrequenztechnik arbeitet weist sie die im Rahmen der Hochfrequenztechnik üblichengängigen Nachteile auf, wie z.B. das Überspringen von Informationen zwischen zwei Leitungen.

Dadurch, daß ein solches Datenübertragungsnetzwerk, wobei jede weitere Sicherheitsebene erst dann abfragbar ist, wenn die vorhergehende Sicherheitsebene erfolgreich durchlaufen ist, betrieben wird, wird bewirkt, daß die Sicherheitsabfragen sequentiell verlaufen. So kann in der ersten Sicherheitsstufe eine grundlegende Vorauswahl getroffen werden, wie z.B. das zu akzeptierende anzuschließende Netzwerk und/oder Einzelgerät. In dieser Stufe können beispielsweise unerwünschte oder inkompatible Netzwerke bzw. Geräte ausgeschlossen werden, wie z.B. die eines zuvor definierten Herstellers, dessen Geräte vordefinierte Normen, wie z.B. Sicherheitsnormen bzw. Umweltnormen, nicht erfüllen, oder Geräte, für welche eine Rückrufaktion läuft.

Dadurch, daß ein solches Datenübertragungsnetzwerk, wobei die erste Sicherheitsebene darin besteht, dass an das drahtgebundene Netzwerk nur derartige drahtungebundene Nettwerke anschließbar sind, welche zuvor im Speicher des drahtgebundenen Netzwerks hinterlegt wurden, betrieben wird, wird bewirkt, daß nur vordefinierte drahtlose Netzwerke an drahtgebundene Netzwerke angeschlossen werden können. Das gleiche gilt auch für anzuschließende Gräte, sei es, daß sie unmittelbar an das drahtgebundene Netzwerk angeschlossen werden, oder mittelbar über ein drahtungebundenes Netzwerk.

Dies kann beispielsweise durch die Hinterlegung eines Passworts im drahtgebundenen Netzwerk, bzw. im Fall, daß es aus mehreren Stromkreisen besteht, im Stromkreis in welchem der Anschluß des drahtungebundenen Netzwerks erlaubt ist, geschehen. Praktisch kann dies dadurch umgesetzt werden, daß in jedem Stromkreis ein Speicher eingebaut ist, beispielsweise dadurch, daß in mindestens einer Steckdose des drahtgebundenen Netzwerks ein Speicher in Verbindung mit einer Logikschaltung verbaut ist. In mindestens einem Speicher kann dann hinterlegt werden, daß dann an diesem Stromkreis nur die in dem Speicher hinterlegten drahtlosen Netzwerke anschließbar sind, bzw. daß dann an diesem Stromkreis nur die in dem Speicher hinterlegten drahtlosen Geräte anschließbar sind, sei es unmittelbar, daß die erlaubten i.e. hinterlegten Geräte an jener Steckdose angeschlossen werden, oder mittelbar, daß an jenem Speicher die erlaubten i.e. hinterlegten Geräte an jenem Drahtlosnetzwerk angeschlossen sind, welches an das drahtgebundene Netzwerk angeschlossen ist. In allen Fällen prüft die Logikschaltung, ob das anzuschließende Gerät / Netzwerk in jenem Speicher des Stromkreises eingetragen ist und erlaubt dann den Anschluß des Netzwerks oder verbietet ihn. In Verbot des Anschlusses kann dadurch stattfinden, daß jene Steckdose diesem Netzwerk / Gerät keinen Versorgungsstrom / Versorgungsspannung bereitstellt.

Konkret wird erfindungsgemäß das erfolgreiche Absolvieren der ersten Sicherheitsebene dadurch bestätigt, daß vom drahtgebundenen Netzwerk dem drahtungebundenen Netzwerk Versorgungsstrom und/oder Versorgungsspannung bereitgestellt wird, bzw. wobei das erfolglose Absolvieren der ersten Sicherheitsebene dadurch quittiert wird, daß vom drahtgebundenen Netzwerk dem Gerät die Strom-/Spannungsversorgung entzogen wird. Dies wird erfindungsgemäß mit einem in der Steckdose verbauten Chip, welcher Zugriff auf den im Stromkreis verbauten Speicher hat, realisiert. Hierbei erkennt der Chip beispielsweise mit Hilfe einer Vergleichsschaltung, daß ein Gerät angeschlossen wird. Er erkennt weiterhin, daß es sich bei diesem Gerät um ein drahtungebundenes WLAN-Netzwerk handelt, beispielsweise weil derartige WLAN-Geräte durch ihre Charakteristika, wie z.B. Stromverbrauch, SSID, Sendermodus (z.B. 802.In), eine Codekennung, die das Gerät ausweist und die mit im Speicher hinterlegten Codekennungen in Einklang steht, erkennbar sind. Im Fall, daß es sich nicht um ein WLAN-Gerät handeln sollte, sondern um ein z.B. Hausgerät, wobei dieses mit Hilfe dieses WLAN-Geräts an das drahtgebundene Netzwerk angeschlossen ist, ist die Vorgehensweise identisch.

Dies ist auch in umgekehrter Richtung sinnvoll, damit z.B. ein Wi-Fi-Netzwerk nicht im Stromkreis der Küche angeschlossen wird, wenn dort am drahtgebundenen Netzwerk bereits ein Mikrowellenherd angeschlossen ist und von diesem mit Strom bzw. Spannung versorgt wird, denn diese beiden stören sich, da sie im selben Frequenzband Strahlungen aussenden. In diesem Fall, kann ein drahtungebundenes WLAN-Netzwerk gar nicht an das drahtgebundene und zur Datenübertragung vorbereitete Hausstromnetz angeschlossen werden, wenn im Speicher des drahtgebundenen Netzwerks ein solches nicht hinterlegt wird. Nach dieser ersten Auswahl, welche den Zweck hat, möglicherweise gefährliche Netzwerke bzw. Geräte, wie z.B. Mikrowellengeräte, die die Wi-Fi-Verbindung stören könnten, vom Anschluß komplett auszuschließen, können dann akzeptierte Geräte angeschlossen werden. Dies geschieht wie geschildert dadurch, daß nur akzeptierte Geräte mit Strom versorgt werden.

Dadurch, daß ein solches Datenübertragungsnetzwerk, wobei die zweite Sicherheitsebene darin besteht, dass das an das drahtgebundene Netzwerk angeschlossene drahtungebundene Netzwerk nur dann an diesem betrieben werden kann, wenn die Sicherheitsnummer des drahtungebundenen Netzwerks im Speicher des drahtgebundenen Netzwerk hinterlegt ist, betrieben wird, wird bewirkt, daß das am drahtgebundenen Netzwerk angeschlossene und mit Strom versorgte drahtlose Netzwerke über eine weitere, individuelle Zugangshürde angeschlossen werden kann. Diese zweite individuelle Zugangshürde kann aus einem Passwort bestehen, welches im Speicher des drahtgebundenen Netzwerks hinterlegt ist. In dieser zweiten Sicherheitsstufe können die Passworte dann mit Hilfe von Push-Technik aus dem Speicher des drahtgebundenen Netzwerks in das dann mit Versorgungsspannung versorgte drahtungebundene Netzwerk übertragen werden. Im Fall, daß das Passwort korrekt ist, werden beide Netzwerke in die Lage versetzt, miteinander Daten auszutauschen. Hierunter fällt auch der Austausch von Daten von an das drahtlose Netzwerk angeschlossene Clients.

Weiterhin wird die Aufgabe gelöst durch ein Verfahren, wobei die Datenbank Ausschlusskriterien für diejenigen Geräteklassen enthält, die nicht gemeinsam betrieben werden können bzw. dürfen, und der Betrieb dieser Geräte innerhalb eines räumlich durch die Ausdehnung des ersten Netzwerks vorgegebenen Bereichs durch das erste Netzwerk verhindert wird, beispielswiese indem ein derartiges ausgeschlossennes Gerät nicht anmeldbar ist. Beispielhaft kommen hier Mikrowellenherde, oder Induktionsherde in Frage.

Eine Ausgestaltungsform des Verfahrens umfasst die Klasse von Geräten, die nicht gemeinsam betrieben werden können, wie z.B sich gegenseitig beeinflussende und/oder eine Hochfrequenz emittierende Geräte umfasst.

Im Betrieb läuft dieses Durchlaufen von mehrstufigen Sicherheitshürden mit Hilfe einer automatisierten Erkennungsroutine und Push-Technologie voll automatisch ab, sodaß wenn das anzuschließende Gerät im netzgebundenen Netzwerk hinterlegt ist, von außen überhaupt nicht erkennbar ist, daß überhaupt eine derartige Routine durchlaufen wird.

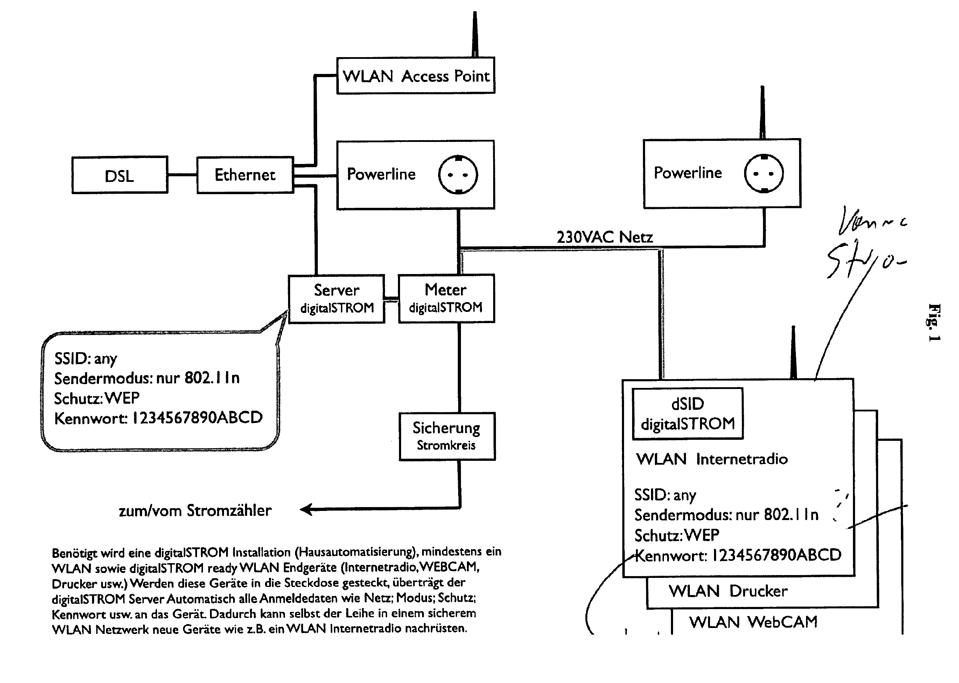

Eine Ausführungsform der Erfindung wird in Fig. 1 dargestellt.

In Fig. 1 ist Hausstromnetz dargestellt, welches mit Hilfe einer "Powerline" geeignet ist, um Daten zu übertragen. Die Datenübertragung kann hierbei mit Hilfe eines hochfrequenten Konzepts (HF) überragen werden, oder mit Hilfe einer vom HF unabhängigen Wirkleistungsmodulation (Digitalstrom).

Gezeigt werden hierbei eine Hausstromautomatisierung (vorliegend realisiert durch Wirkleistungsmodulation: "Digitalstrom"), mindestens ein WLAN, sowie auf diese Weise über das Hausstromnetz Daten übermittelnde WLAN-fähige Endgeräte (z.B. einen WLAN-Drucker, eine WLAN-Webcam, ein WLAN-Router (hier nicht dargestellt)). Jedes dieser Endgeräte umfasst einen dSID-Chip, der die Datenkommunikation zwischen diesem Gerät und dem Stromnetz als Datentransportmedium ermöglicht. Wird ein derartiger dSID-Chip in ein beliebiges Endgerät eingebaut, so wird dieses hierdurch in die Lage versetzt, Daten über die Stromleitung zu übertragen.

Wird ein derartiges Gerät in die Steckdose gesteckt, werden aus einem Speicher im drahtgebundenen Netzwerk (z.B. ein so genannter Digitalstromserver) die dort hinterlegten Anmeldedaten, wie z.B. erlaubtes Netz, Modus, Schutz, Kennwort, usw. an das anzuschließende Gerät übertragen.

Stimmen diese zu einem Teil überein, so wird das anzuschließende Gerät mit Strom versorgt. In diesem Fall wird das mit Strom versorgte Gerät nicht in die Lage versetzt, Daten über das drahtgebundene Netzwerk auszutauschen, kann aber lokal als nicht mit dem drahtgebundenen Netzwerk vernetztes Gerät betrieben werden.

Stimmen diese Daten zu 100% überein, so wird das mit Strom versorgte Gerät in die Lage versetzt, Daten über das drahtgebundene Netzwerk auszutauschen.

## Patentansprüche

1. Datenübertragungsnetzwerk zum Anschluß eines elektrischen Geräts über ein erstes Netzwerk an ein zweites Netzwerks, wobei das zweite Netzwerk ein Netzwerk eines Hausstromnetzes ist und wobei das erste und das zweite Netzwerk ein physisch/physikalisch anderes Übertragungsmedium verwendet als das erste Netzwerk und wobei das zweite Netzwerk eine Verarbeitungseinheit aufweist, sowie einen Speicher, und wobei der Speicher eine Datenbank umfasst und wobei die Daten zum Anschluß des Gerätes an das erste Netzwerk automatisiert der Datenbank des Speichers mit Hilfe der Verarbeitungseinheit entnehmbar sind, um dem anzuschließenden Gerät den Zutritt in das erste Netzwerke zu ermöglichen.

2. Datenübertragungsnetzwerk zum Anschluß eines elektrischen Geräts nach Anspruch 1, wobei das erste Netzwerk mit dem zweiten Netzwerk mit Hilfe der automatisiert der Datenbank des Speichers entnehmbaren Daten verbindbar ist.

3. Datenübertragungsnetzwerk zum Anschluß eines elektrischen Geräts nach Anspruch 2, wobei das drahtlose Netzwerk ein Funknetzwerk ist.

4. Datenübertragungsnetzwerk zum Anschluß eines elektrischen Geräts nach Anspruch 3, wobei das Funknetzwerk ein WLAN-Netzwerk ist.

5. Datenübertragungsnetzwerk zum Anschluß eines elektrischen Geräts nach einem der zuvor genannten Ansprüche, wobei das zweite Netzwerk das zur Datenübertragung verwendete Hausstromnetz ist.

6. Datenübertragungsnetzwerk zum Anschluß eines elektrischen Geräts nach einem der zuvor genannten Ansprüche, wobei die Daten zum Anschluß des Geräts automatisiert der Datenbank des Speichers entnehmbar sind.

7. Datenübertragungsnetzwerk zum Anschluß eines elektrischen Geräts nach einem der zuvor genannten Ansprüche, wobei das Gerät ein ein Hausgerät ist.

8. Datenübertragungsnetzwerk zum Anschluß eines elektrischen Geräts nach einem der zuvor genannten Ansprüche wobei die Verbindung von erstem netzwerk und zweitem Netzwerk mindestens zwei voneinander unabhängige Sicherheitsebenen umfasst.

9. Datenübertragungsnetzwerk nach Anspruch 8, wobei jede weitere Sicherheitsebene erst dann abfragbar ist, wenn die vorhergehende Sicherheitsebene erfolgreich durchlaufen ist.

10. Datenübertragungsnetzwerk nach Anspruch 9, wobei die erste Sicherheitsebene darin besteht, dass an das erste Netzwerk nur derartige Geräte und/oder drahtungebundene Netzwerke anschließbar sind, welche zuvor im Speicher des ersten Netzwerks hinterlegt wurden.

11. Datenübertragungsnetzwerk nach Anspruch 10, wobei das erfolglose Absolvieren der ersten Sicherheitsebene **dadurch** quittiert wird, daß vom drahtgebundenen Netzwerk dem Gerät die Strom-/Spannungsversorgung entzogen wird.

12. Datenübertragungsnetzwerk nach Anspruch 11, wobei die zweite Sicherheitsebene darin besteht, dass das an das drahtgebundene Netzwerk angeschlossene drahtungebundene Netzwerk nur dann an diesem betrieben werden kann, wenn die Sicherheitsnummer des drahtungebundenen Netzwerks im Speicher des drahtgebundenen Netzwerk hinterlegt ist.

13. Verfahren umfassend ein Datenübertragungsnetzwerk nach einem der vorgenannten Ansprüche, wobei die Datenbank Ausschlusskriterien zwischen Geräteklassen enthält, die nicht gemeinsam betrieben werden können, und der Betrieb dieser Geräte innerhalb eines räumlich durch die Ausdehnung des ersten Netzwerks vorgegebenen Bereichs durch das erste Netzwerk verhindert wird.

14. Verfahren nach Anspruch 13, wobei die Klasse von Geräten, die nicht gemeinsam betrieben werden können, sich gegenseitig beeinflussende Hochfrequenz emittierende Geräte umfasst.
